# EUROPÄISCHE PATENTSCHRIFT

(11) **EP 3 682 774 B1**
(45) Veröffentlichungstag und Bekanntmachung des Hinweises auf die Patenterteilung: **09.03.2022**
(21) Anmeldenummer: 19020028.7
(22) Anmeldetag: 16.01.2019
(51) Int. Cl.: A47J 31/44, A47J 31/46

(54) **MILCHAUFSCHÄUMER**
MILK FOAMER
DISPOSITIF DE MOUSSAGE DE LAIT

(43) Veröffentlichungstag der Anmeldung: 22.07.2020
(73) Patentinhaber: RIVERFLOW GmbH, 52070 Aachen (DE)
(72) Erfinder: ZWICK, Boris, 52070 Aachen (DE)
(74) Vertreter: von Bülow & Tamada

(56) Entgegenhaltungen:
- WO-A1-2008/083941
- US-A- 6 099 878

## Beschreibung

Die vorliegende Erfindung betrifft einen Milchaufschäumer.

Milchaufschäumer sind aus der US 6 099 878 A und DE 10 2008 058 934 B4 bekannt.

Aufgabe der Erfindung ist, den Gegenstand in folgender technischer Hinsicht zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst ein Milchaufschäumer einen ersten Milchkanal zum Leiten von Milch oder milchähnlicher Getränkeflüssigkeit zu einem ersten Milchauslass, einen ersten Schäumungsabschnitt, der eingerichtet ist, auf Betätigung Milch oder milchähnliche Getränkeflüssigkeit im ersten Milchkanal in Milchschaum zu wandeln und über den ersten Milchauslass auszugeben, ein erstes Betätigungselement zum individuellen Betätigen des ersten Schäumungsabschnittes, einen zweiten Milchkanal zum Leiten von Milch oder milchähnlicher Getränkeflüssigkeit zu einem zweiten Milchauslass, einen zweiten Schäumungsabschnitt, der eingerichtet ist, auf Betätigung Milch oder milchähnliche Getränkeflüssigkeit im zweiten Milchkanal in Milchschaum zu wandeln und über den zweiten Milchauslass auszugeben, ein zweites Betätigungselement zum individuellen Betätigen des zweiten Schäumungsabschnittes, und ein drittes Betätigungselement zum gekoppelten Betätigen des ersten Schäumungsabschnittes und des zweiten Schäumungsabschnittes.

In einer Weiterbildung des angegebenen Milchaufschäumers sind die beiden Auslässe in einem gemeinsamen Auslasskopf angeordnet.

In einer anderen Weiterbildung des angegebenen Milchaufschäumers wird der erste Milchkanal aus einen Behälter mit Milch oder milchähnlicher Getränkeflüssigkeit versorgt, der verschieden ist, von einem Behälter zum Versorgen des zweiten Milchkanals mit Milch oder milchähnlicher Getränkeflüssigkeit.

In einer weiteren Weiterbildung umfasst der angegebene Milchaufschäumer ein Touchscreen, auf dem die Betätigungselemente abbildbar sind.

In einer besonderen Weiterbildung umfasst der angegebene Milchaufschäumer eine auf dem Touchscreen abgebildete Auswahltaste zur Auswahl einer Abbildung des ersten Betätigungselementes und des zweiten Betätigungselementes oder des dritten Betätigungselementes.

In einer bevorzugten Weiterbildung des angegebenen Milchaufschäumers ist der Touchscreen eingerichtet, nur aktivierte Betätigungselemente abzubilden.

Gemäß einem weiteren Aspekt der Erfindung umfasst ein Verfahren zum Steuern eines der angegebenen Milchaufschäumer die Schritte Anzeigen einer Auswahltaste zur Auswahl einer Anzeige des ersten Betätigungselementes und des zweiten Betätigungselementes oder des dritten Betätigungselementes, Anzeigen des ersten Betätigungselementes und des zweiten Betätigungselementes oder des dritten Betätigungselementes in Abhängigkeit eines Schaltzustandes der Auswahltaste und Ansteuern des ersten Schäumungsabschnitts und/oder des zweiten Schäumungsabschnitts in Abhängigkeit einer Bedienung des angezeigten Betätigungselementes.

Gemäß einem weiteren Aspekt der Erfindung ist eine Steuervorrichtung eingerichtet, um eines der angegebenen Verfahren durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte des angegebenen Verfahrens durchzuführen, wenn das Computerprogramm auf einem elektronischen Gerät oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, das angegebene Verfahren durchführt.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine perspektivische Ansicht eines Milchaufschäumers mit einem Milchauslasskopf,
Fig. 2 eine Strukturansicht einer Erweiterung des Milchaufschäumers der Fig. 1,
Fig. 3 ein Touchscreen der Erweiterung des Milchaufschäumers der Fig. 2 in einem ersten Funktionszustand, und
Fig. 4 ein Touchscreen der Erweiterung des Milchaufschäumers der Fig. 2 in einem zweiten Funktionszustand.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

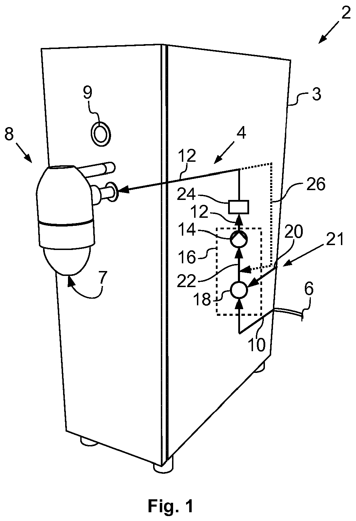

Es wird auf Fig. 1 Bezug genommen, die in einer perspektivischen Darstellung einen Milchaufschäumer 2 zeigt. Die einzelnen Elemente im Inneren des Milchaufschäumers 2 sind nur strukturell angedeutet.

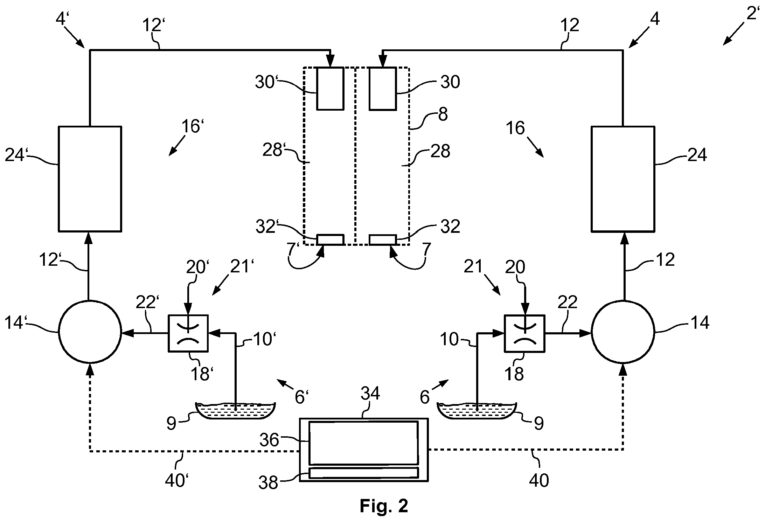

Der Milchaufschäumer 2 umfasst einen sich durch ein Gehäuse 3 erstreckenden Milchkanal 4, der sich ausgehend von einem Milchansaugschlauch 6 bis zu einer Austrittsöffnung 7 eines Milchauslasskopfs 8 erstreckt. Im Betrieb des Milchaufschäumers 2 wird auf Druck eines Bedienknopfes 9 am Gehäuse 3 des Milchaufschäumers 2 über den Milchansaugschlauch 6 aus einem in Fig. 2 angedeuteten Milchbehälter 9 Milch 10 in den Milchkanal 4 angesaugt und zu einem Milchschaum 12 verarbeitet und an der Austrittsöffnung 7 am Milchauslasskopf 8 ausgegeben.

Zur Erzeugung des Milchschaumes 12 saugt eine Pumpe 14 in einem Schäumungsabschnitt 16 die Milch 10 an. Über eine vor der Pumpe 14 angeordnete Venturi-Düse 18 des Schäumungsabschnitts 16 wird die Milch 10 dabei mit Luft 20 über eine Luftleitung 21 angereichert, so dass in die Pumpe 14 mit Luft 20 durchsetzte Milch 22 eintritt und dort vermischt wird. Auf diese Weise entsteht grundsätzlich der Milchschaum 12. In einem sich anschließenden Temperierelement 24 wird dann der Milchschaum 12 nachbearbeitet und beispielsweise erwärmt, was zu einer Ausdehnung der sich im Milchschaum 12 befindlichen Luftbläschen und einer Stabilisierung des Milchschaumes 12 führt.

Weitere Details zum Milchaufschäumer 2 können der DE 10 2008 058 934 B4 entnommen werden.

Es wird auf Fig. 2 Bezug genommen, die eine schematische Strukturansicht einer Erweiterung des Milchaufschäumers 2' zeigt.

Der erweiterte Milchaufschäumer 2' umfasst bis auf den Auslasskopf 8 des Milchaufschäumers 2 der Fig. 1 alle Elemente doppelt. Das jeweils verdoppelte Element des erweiterten Milchaufschäumers 2' ist in Fig. 2 mit einem Apostroph im Bezugszeichen angedeutet.

Dabei sind die beiden Austrittsöffnungen 7, 7' in einem gemeinsamen Milchauslasskopfs 8, durch die allerdings für jeden Milchschaum 12, 12' getrennt ein eigener Auslasskopfkanal 28, 28' geführt ist. Am Anfang eines jeden Auslasskopfkanals 28, 28' ist je ein erster Filter 30, 30' angeordnet, während am Ende eines jeden Auslasskopfkanals 28, 28' je ein zweiter Filter 32, 32' angeordnet ist.

Zum Betrieb der jeweiligen Pumpe 14, 14' ist eine gemeinsame Steuervorrichtung 34 mit einem Touchscreen 36 und einem Controller 38 vorgesehen. Zur Steuervorrichtung 34 gehören elektrische Steuerleitungen 40, 40' mit denen die Steuervorrichtung 34 steuerungstechnisch an die Pumpen 14, 14' wie in Fig. 2 gezeigt angeschlossen sind.

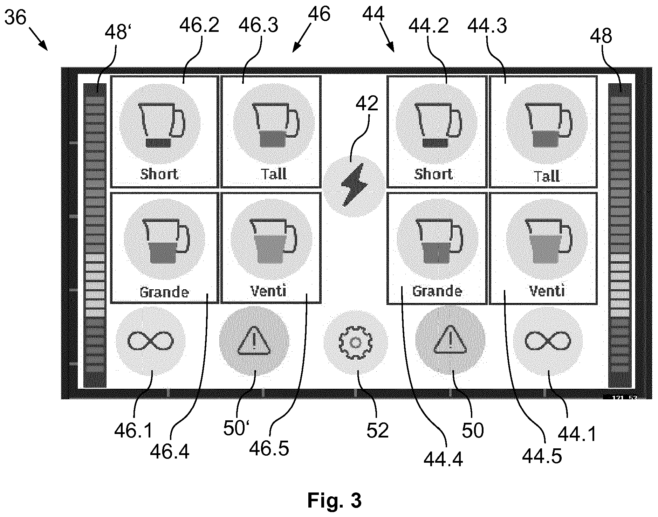

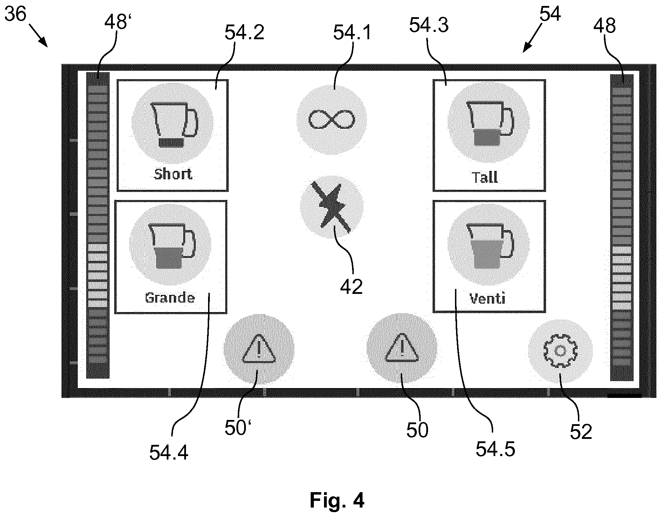

Auf dem Touchscreen 36 lassen sich Informationen über den Milchaufschäumer 2' und Steuerelemente zur Steuerung des Milchaufschäumers 2' abbilden, die nachstehend anhand der Fig. 3 und 4 erläutert werden sollen, in denen der Touchscreen 36 in verschiedenen Funktionszuständen des Milchaufschäumers 2' abgebildet ist.

Auf dem Touchscreen 36 ist eine Auswahltaste 42 abgebildet, die durch Drücken auf den Touchscreen 36 an der Stelle der Auswahltaste 42 zwischen einem in Fig. 3 gezeigten ersten Auswahlzustand und einem in Fig. 4 gezeigten zweiten Auswahlzustand hin- und hergeschaltet werden kann. Der Auswahlzustand der Auswahltaste 42 gibt den Funktionszustand des Milchaufschäumers 2' vor.

In einem im Fig. 3 abgebildeten ersten Funktionszustand des Milchaufschäumers 2' sind auf dem Touchscreen 36 ein erstes Auswahlmenü 44 und ein zweites Auswahlmenü 46 abgebildet, die je eine manuelle Starttaste 44.1, 46.1, eine erste Programmtaste 44.2, 46.2, eine zweite Programmtaste 44.3, 46.3, eine dritte Programmtaste 44.4, 46.4 und eine vierte Programmtaste 44.5, 46.5 besitzen. Die Starttasten 44.1, 46.1 und die Programmtasten 44.2 bis 46.5 funktionieren in der gleichen Weise wie die Auswahltaste 42. Eine Aktivierung erfolgt durch Drücken des Touchscreens 36 im Bereich der jeweiligen Abbildung der Taste auf dem Touchscreen 36.

Wird eine der manuellen Starttasten 44.1, 46.1 gedrückt, wird die Steuervorrichtung 34 angewiesen, über die Steuerleitungen 40, 40' die Pumpen 14, 14' zu betätigen, Milch aus den Milchbehältern 9, 9' anzusaugen und als Milchschaum 12, 12' über die jeweilige Austrittsöffnung 7, 7' auszugeben, bis der Druck von der jeweiligen Starttaste 44.1, 46.1 wieder gelöst wird. Ein Druck auf die Starttaste 44.1 des ersten Auswahlmenüs 44 steuert dabei die Pumpe 14 an, Druck auf die Starttaste 44.1 des zweiten Auswahlmenüs 44 die weitere Pumpe 14' ansteuert.

Demgegenüber ist jeder Programmtaste 44.2 bis 46.5 ein vorbestimmter Füllstand an Milchschaum 12, 12' zugeordnet, mit dem eine unter der Austrittsöffnung 7, 7' stehende Tasse zu befüllen ist. Dieser Füllstand kann beispielsweise durch verschiedene Zeitdauern definiert werden, die dann den einzelnen Programmtaste 44.2 bis 46.5 zugeordnet werden. Die Zuordnung dieser Zeitdauern kann beispielsweise per Speicherprogrammierbarer Steuerung, SPS genannt, erfolgen. Wird eine bestimmte Programmtaste 44.2 bis 46.5 gedrückt, dann wird die Steuervorrichtung 34 angewiesen, über die Steuerleitungen 40, 40' die Pumpen 14, 14' zu betätigen, Milch aus den Milchbehältern 9, 9' anzusaugen und als Milchschaum 12, 12' über die jeweilige

Austrittsöffnung 7, 7' auszugeben, bis die der jeweiligen Programmtaste 44.2 bis 46.5 zugeordnete Zeitdauer abgelaufen ist.

Zum Betrieb des Milchaufschäumers 2' mit einem der beiden Auswahlmenüs 44, 46 wird zunächst unter einer Austrittsöffnungen 7, 7' eine Tasse positioniert. Dann betätigt ein Benutzer eine der Tasten auf dem Auswahlmenü 44, 46, welches der Austrittsöffnung 7, 7' zugeordnet ist, unter welcher die Tasse positioniert ist. In dem Funktionszustand des Milchaufschäumers 2' der Fig.3 lassen sich die Pumpen 14, 14' individuell betätigen, so dass sich aus den Austrittsöffnungen 7, 7' individuell Milchschaum ausgeben lässt.

Der Füllstand der Milchbehälter 9, 9' lässt sich dabei über Füllstandsanzeigen 48 überwachen. Unterschreitet der Füllstand ein kritisches Level, so lässt sich alternativ oder zusätzlich auf einem Füllstandslämpchen 50, 50' ein entsprechender Warnhinweis ausgeben.

Der erste Funktionszustand des Milchaufschäumers 2' nach Fig. 3 eignet sich sehr gut, den Betrieb des Milchaufschäumers 2' aufrecht zu erhalten, wenn einer der beiden Milchbehälter 9, 9' ein kritisches Level erreicht haben und fast leer sind. Es lässt sich dann weiterhin Milch über den entsprechend anderen Milchbehälter 9', 9 entnehmen und der Betrieb aufrechterhalten, während der Milchbehälter 9, 9' mit dem kritischen Füllstand neu befüllt wird. Das Bedienpersonal kann den Milchbehälter 9, 9' mit dem kritischen Level in einfacher Weise anhand des Füllstandslevels 50, 50' erkennen und die Tasse unter die entsprechend andere Austrittsöffnung 7', 7 stellen.

Über eine Einstellungstaste 52 lässt sich ferner ein nicht weiter dargestelltes Einstellungsmenü erreichen, in dem sich weitere Einstellungen am Milchaufschäumer 2' vornehmen lassen.

In einem im Fig. 4 abgebildeten zweiten Funktionszustand des Milchaufschäumers 2' ist auf dem Touchscreen 36 ein einziges drittes Auswahlmenü 54 und abgebildet, das eine manuelle Starttaste 54.1, eine erste Programmtaste 54.2, eine zweite Programmtaste 54.3, eine dritte Programmtaste 54.4 und eine vierte Programmtaste 54.5 besitzt und die in der gleichen Weise funktionieren, wie die Auswahltaste 42. Eine Aktivierung erfolgt also durch Drücken des Touchscreens 36 im Bereich der jeweiligen Abbildung der Taste auf dem Touchscreen 36.

Wird die manuelle Starttaste 54.1 des dritten Auswahlmenüs 54 gedrückt, wird die Steuervorrichtung 34 angewiesen, über die Steuerleitungen 40, 40' gleichzeitig beide Pumpen 14, 14' zu betätigen, Milch aus den Milchbehältern 9, 9' anzusaugen und als Milchschaum 12, 12' gleichzeitig über beide Austrittsöffnung 7, 7' auszugeben, bis der Druck von der Starttaste 54.1 wieder gelöst wird.

Demgegenüber ist jeder Programmtaste 54.2 bis 54.5 des dritten Auswahlmenüs ein vorbestimmter Füllstand an Milchschaum 12, 12' zugeordnet, mit dem eine unter beiden Austrittsöffnungen 7, 7' stehende Tasse zu befüllen ist. Eine Programmierung dieses vorbestimmten Füllstandes kann analog zum ersten und zweiten Auswahlmenü 44, 46 erfolgen. Wird eine bestimmte Programmtaste 54.2 bis 54.5 des dritten Auswahlmenüs gedrückt, dann wird die Steuervorrichtung 34 angewiesen, über die Steuerleitungen 40, 40' gleichzeitig beide Pumpen 14, 14' zu betätigen, Milch aus den Milchbehältern 9, 9' anzusaugen und als Milchschaum 12, 12' gleichzeitig über beide Austrittsöffnungen 7, 7' auszugeben, bis die der jeweiligen Programmtaste 54.2 bis 54.5 zugeordnete Zeitdauer abgelaufen ist.

Der Milchaufschäumer 2' umfasst damit zwei autarken Milchaufschäumereinzelsysteme. Der Zweck jedes Milchaufschäumereinzelsystems ist es, ein Fluid in Form von Milch 10, 10' zu fördern und in ein Gefäß auszugeben.

Die beiden Milchaufschäumereinzelsysteme werden durch eine gemeinsame Steuerungseinheit (SPS) angefahren, die beispielsweise im Controller 38 untergebracht sein kann. Auf diese Weise lassen sich für beide Milchaufschäumereinzelsysteme jeweils unterschiedliche Fördergeschwindigkeiten- und Mengen vorgeben.

Somit handelt es sich nicht um ein einzelnes Milchaufschäumereinzelsystem mit zwei Auslässen 7, 7', sondern um zwei getrennte Milchaufschäumereinzelsysteme mit zwei Auslässen 7, 7', die bei Bedarf über die Auswahltaste 42 zusammengeschaltet werden können.

Die beiden Milchaufschäumereinzelsysteme sind prinzipiell voneinander getrennt und können daher über die Auswahltaste 42 auf dem Touchscreen 36 der Steuervorrichtung 34 im entkoppelten Modus nach Fig. 3 individuell voneinander aktiviert werden.

## Patentansprüche

1. Milchaufschäumer (2') mit
- einem ersten Milchkanal (4) zum Leiten von Milch (10) oder milchähnlicher Getränkeflüssigkeit zu einem ersten Milchauslass (7),
- einem ersten Schäumungsabschnitt (16), der eingerichtet ist, auf Betätigung Milch (10) oder milchähnliche Getränkeflüssigkeit im ersten Milchkanal (4) in Milchschaum (12) zu wandeln und über den ersten Milchauslass (7) auszugeben,
- ein erstes Betätigungselement (44.1) zum individuellen Betätigen des ersten Schäumungsabschnittes (16),
- einem zweiten Milchkanal (4') zum Leiten von Milch (10') oder milchähnlicher Getränkeflüssigkeit zu einem zweiten Milchauslass (7'),
- einem zweiten Schäumungsabschnitt (16'), der eingerichtet ist, auf Betätigung Milch (10') oder milchähnliche Getränkeflüssigkeit im zweiten Milchkanal (4') in Milchschaum (12') zu wandeln und über den zweiten Milchauslass (7') auszugeben,
- ein zweites Betätigungselement (46.1) zum individuellen Betätigen des zweiten Schäumungsabschnittes (16'), **gekennzeichnet durch**
- ein drittes Betätigungselement (56.1) zum gekoppelten Betätigen des ersten Schäumungsabschnittes (16) und des zweiten Schäumungsabschnittes (16').

2. Milchaufschäumer (2') nach Anspruch 1, wobei die beiden Milchauslässe (7, 7') in einem gemeinsamen Auslasskopf (8) angeordnet sind.

3. Milchaufschäumer (2') nach Anspruch 1 oder 2, wobei der erste Milchkanal (4) aus einen Behälter (9) mit Milch (10) oder milchähnlicher Getränkeflüssigkeit versorgt wird, der verschieden ist, von einem Behälter (9') zum Versorgen des zweiten Milchkanals (4') mit Milch (10') oder milchähnlicher Getränkeflüssigkeit.

4. Milchaufschäumer (2') nach einem der vorstehenden Ansprüche, umfassend ein Touchscreen (36), auf dem die
Betätigungselemente (44.1, 46.1, 56.1) abbildbar sind.

5. Milchaufschäumer (2') nach Anspruch 4, umfassend eine auf dem Touchscreen (36) abgebildete Auswahltaste (42) zur Auswahl einer Abbildung des ersten Betätigungselementes (44.1) und des zweiten Betätigungselementes (46.1) oder des dritten Betätigungselementes (56.1).

6. Milchaufschäumer (2') nach Anspruch 5, wobei der Touchscreen (36) eingerichtet ist, nur zur Betätigung vorgesehene Betätigungselemente (44.1, 46.1, 56.1) abzubilden.

7. Verfahren zum Steuern eines Milchaufschäumers (2') nach einem der vorstehenden Ansprüche, umfassend:
- Anzeigen einer Auswahltaste (42) zur Auswahl einer Anzeige des ersten Betätigungselementes (44.1) und des zweiten Betätigungselementes (46.1) oder des dritten Betätigungselementes (56.1),
- Anzeigen des ersten Betätigungselementes (44.1) und des zweiten Betätigungselementes (46.1) oder des dritten Betätigungselementes (56.1) in Abhängigkeit eines Schaltzustandes der Auswahltaste (42), und
- Ansteuern des ersten Schäumungsabschnitts (16) und/oder des zweiten Schäumungsabschnitts (16') in Abhängigkeit einer Bedienung des angezeigten Betätigungselementes (44.1, 46.1, 56.1).

8. Steuervorrichtung (34) zur Durchführung eines Verfahrens nach Anspruch 7.

## Claims

1. Milk frother (2') comprising
- a first milk channel (4) for conducting milk (10) or milk-like beverage liquid to a first milk outlet (7),
- a first foaming section (16) adapted to convert milk (10) or milk-like beverage liquid in the first milk channel (4) into milk foam (12) upon actuation and to dispense the milk foam via the first milk outlet (7)
- a first actuator (44.1) for individually actuating the first foaming section (16),
- a second milk passage (4') for conducting milk (10') or milk-like beverage liquid to a second milk outlet (7')
- a second foaming section (16') adapted to convert milk (10') or milk-like beverage liquid in the second milk passage (4') into milk foam (12') upon actuation and to discharge it through the second milk outlet (7')
- a second actuating member (46.1) for individually actuating the second foaming section (16'),
**characterized by**
- a third actuating element (56.1) for coupled actuation of the first foaming section (16) and the second foaming section (16').

2. Milk frother (2') according to claim 1, wherein the two milk outlets (7, 7') are arranged in a common outlet head (8).

3. Milk frother (2') according to claim 1 or 2, wherein the first milk channel (4) is supplied with milk (10) or milk-like beverage liquid from a container (9) different from a container (9') for supplying the second milk channel (4') with milk (10') or milk-like beverage liquid.

4. Milk frother (2') according to any of the preceding claims, comprising a touch screen (36) on which the actuating elements (44.1, 46.1, 56.1) are imageable.

5. Milk frother (2') according to claim 4, comprising a selection button (42) mapped on the touch screen (36) for selecting a mapping of the first actuating element (44.1) and the second actuating element (46.1) or the third actuating element (56.1).

6. Milk frother (2') according to claim 5, wherein the touch screen (36) is arranged to map only actuating elements (44.1, 46.1, 56.1) intended for actuation.

7. Method of controlling a milk frother (2') according to any one of the preceding claims, comprising:
- Displaying a selection button (42) for selecting a display of the first actuating element (44.1) and the second actuating element (46.1) or the third actuating element (56.1),
- displaying the first actuating element (44.1) and the second actuating element (46.1) or the third actuating element (56.1) in dependence on a switching state of the selection key (42), and
- controlling the first foaming section (16) and/or the second foaming section (16') in dependence on an operation of the indicated actuating element (44.1, 46.1, 56.1).

8. Control device (34) for carrying out a method according to claim 7.

## Revendications

1. Mousseur à lait (2') comprenant
- un premier canal de lait (4) pour diriger le lait (10) ou le liquide de boisson similaire au lait vers une première sortie de lait (7),
- une première section de moussage (16) adaptée pour convertir, lors de l'actionnement, le lait (10) ou le liquide de boisson similaire au lait dans le premier canal de lait (4) en mousse de lait (12) et pour la distribuer via la première sortie de lait (7),
- un premier élément d'actionnement (44.1) pour l'actionnement individuel de la première section de moussage (16),
- un deuxième canal à lait (4') pour guider le lait (10') ou le liquide de boisson similaire au lait vers une deuxième sortie de lait (7'),
- une deuxième section de moussage (16') qui est adaptée pour transformer, lors de l'actionnement, le lait (10') ou le liquide de boisson similaire au lait dans le deuxième canal de lait (4') en mousse de lait (12') et pour la distribuer via la deuxième sortie de lait (7'),
- un deuxième élément d'actionnement (46.1) pour l'actionnement individuel de la deuxième section de moussage (16'),
**caractérisé par**
- un troisième élément d'actionnement (56.1) pour l'actionnement couplé de la première section de moussage (16) et de la deuxième section de moussage (16').

2. Mousseur à lait (2') selon la revendication 1, dans lequel les deux sorties de lait (7, 7') sont disposées dans une tête de sortie commune (8).

3. Mousseur de lait (2') selon la revendication 1 ou 2, dans lequel le premier canal de lait (4) est alimenté en lait (10) ou en liquide de boisson similaire au lait à partir d'un récipient (9) qui est différent d'un récipient (9') pour alimenter le deuxième canal de lait (4') en lait (10') ou en liquide de boisson similaire au lait.

4. Mousseur à lait (2') selon l'une des revendications précédentes, comprenant un écran tactile (36) sur lequel les éléments d'actionnement (44.1, 46.1, 56.1) peuvent être représentés.

5. Mousseur à lait (2') selon la revendication 4, comprenant une touche de sélection (42) représentée sur l'écran tactile (36) pour sélectionner une représentation du premier élément d'actionnement (44.1) et du deuxième élément d'actionnement (46.1) ou du troisième élément d'actionnement (56.1).

6. Mousseur à lait (2') selon la revendication 5, dans lequel l'écran tactile (36) est agencé pour ne représenter que des éléments d'actionnement (44.1, 46.1, 56.1) prévus pour être actionnés.

7. Procédé de commande d'un mousseur à lait (2') selon l'une des revendications précédentes, comprenant :
- Affichage d'une touche de sélection (42) pour sélectionner un affichage du premier élément d'actionnement (44.1) et du deuxième élément d'actionnement (46.1) ou du troisième élément d'actionnement (56.1),
- affichage du premier élément d'actionnement (44.1) et du deuxième élément d'actionnement (46.1) ou du troisième élément d'actionnement (56.1) en fonction d'un état de commutation de la touche de sélection (42), et
- commande de la première section de moussage (16) et/ou de la deuxième section de moussage (16') en fonction d'une manipulation de l'élément d'actionnement affiché (44.1, 46.1, 56.1).

8. Dispositif de commande (34) pour la mise en œuvre d'un procédé selon la revendication 7.
